# EUROPÄISCHE PATENTSCHRIFT

(11) **EP 2 596 042 B1**
(45) Veröffentlichungstag und Bekanntmachung des Hinweises auf die Patenterteilung: **13.05.2015**
(21) Anmeldenummer: 11731403.9
(22) Anmeldetag: 15.07.2011
(51) Int. Cl.: C08G 18/72, C08G 18/76, C08G 18/79, G02B 1/04

(54) **POLYISOCYANATGEMISCHE**
POLYISOCYANATE MIXTURES
MÉLANGES DE POLYISOCYANATES

(30) Priorität: 20.07.2010 DE 102010031683
(43) Veröffentlichungstag der Anmeldung: 29.05.2013
(73) Patentinhaber: Bayer Intellectual Property GmbH, 40789 Monheim (DE)
(72) Erfinder: GRESZTA-FRANZ, Dorota, 42659 Solingen (DE); LAAS, Hans-Josef, 51519 Odenthal (DE); HALPAAP, Reinhard, 51519 Odenthal (DE); MAGER, Dieter, 51373 Leverkusen (DE); MEIER-WESTHUES, Hans-Ulrich, 51379 Leverkusen (DE)
(74) Vertreter: BIP Patents
(86) Internationale Anmeldenummer: PCT/EP2011/062175
(87) Internationale Veröffentlichungsnummer: WO 2012/010523

(56) Entgegenhaltungen:
- EP-A1- 2 065 415
- EP-A2- 0 180 873
- US-A- 5 645 938
- US-A1- 2009 018 271

## Beschreibung

Die Herstellung lichtechter und wetterbeständiger Kunststoffe durch Umsetzung von aliphatischen bzw. cycloaliphatischen Polyisocyanaten mit Verbindungen, die acide Wasserstoffatome enthalten, ist bekannt. In Abhängigkeit von der Art der H-aciden Reaktionspartner, wie z. B. Polyolen, Polyaminen und/oder Polythiolen, entstehen hierbei Polyadditionsprodukte mit beispielsweise Urethan-, Harnstoff- und/oder Thiourethanstrukturen.

Synonym für die Vielzahl unterschiedlicher Polymere, die sich aus Polyisocyanaten und H-aciden Verbindungen herstellen lassen, wird im Folgenden auch der allgemeine Begriff "Polyurethane" verwendet.

Für verschiedene Anwendungen, beispielsweise als leichtgewichtiger Ersatz für mineralisches Glas zur Herstellung von Scheiben für Automobil- und Flugzeugbau oder als Vergussmassen für optische, elektronische oder optoelektronische Bauteile, ist heute im Markt ein zunehmendes Interesse an transparenten, lichtechten Polyurethanmassen zu verzeichnen.

Insbesondere für hochwertige optische Anwendungen, wie z. B. für Linsen oder Brillengläser, besteht allgemein der Wunsch nach Kunststoffmaterialien, die eine hohe Lichtbrechung und gleichzeitig eine geringe Dispersion (hohe Abbe-Zahl) aufweisen.

Die Herstellung von transparenten Polyurethanmassen mit hohem Brechungsindex wurde bereits vielfach beschrieben. In der Regel kommen dabei als Polyisocyanatkomponenten sogenannte araliphatische Diisocyanate zum Einsatz, d. h. solche Diisocyanate, deren Isocyanatgruppen über aliphatische Reste an einem aromatischen System gebunden vorliegen. Aufgrund ihrer aromatischen Strukturen ergeben araliphatische Diisocyanate Polyurethane, die einen erhöhten Brechungsindex aufweisen, gleichzeitig garantieren die aliphatisch gebundenen Isocyanatgruppen die für hochwertige Anwendungen benötigte Lichtechtheit und geringe Vergilbungsneigung.

US 4680369 und US 4689387 beschreiben beispielsweise als Linsenmaterialien geeignete Polyurethane bzw. Polythiourethane, bei deren Herstellung zur Erzielung besonders hoher Brechungsindices spezielle Schwefel enthaltende Polyole bzw. mercaptofunktionelle aliphatische Verbindungen mit araliphatischen Diisocyanaten, wie z. B. 1,3-Bis(isocyanatomethyl)benzol (m-Xylylendiisocyanat, m-XDI), 1,4-Bis(isocyanatomethyl)benzol (p-Xylylendiisocyanat, p-XDI), 1,3-Bis(2-isocyanatopropan-2-yl)benzol (m-Tetramethylxylylendiisocyanat, m-TMXDI) oder 1,3-Bis(isocyanatomethyl)-2,4,5,6-tetrachlorbenzol kombiniert werden.

Araliphatische Diisocyanate, wie m- und p-XDI oder m-TMXDI, werden auch in einer Vielzahl weiterer Veröffentlichungen, wie z. B. der EP-A 0 235 743, EP-A 0 268 896, EP-A 0 271 839, EP-A 0 408 459, EP-A 0 506 315, EP-A 0 586 091 und EP-A 0 803 743, als die bevorzugten Polyisocyanatkomponenten zur Herstellung hochbrechender Linsenmaterialien genannt. Sie dienen dabei als Vernetzerkomponenten für Polyole und/oder Polythiole und ergeben in Abhängigkeit vom Reaktionspartner transparente Kunststoffe mit hohen Brechungsindices im Bereich von 1,56 bis 1,67 und vergleichsweise hohen Abbe-Zahlen bis zu 45.

EP-A-2 065 415 offenbart lichtechte Polyurethane, die als optische Linsen verwendet werden. Für die Herstellung der optischen Linsen wird entweder HDI oder XDI verwendet.

Allen bisher genannten Verfahren zur Herstellung hoch lichtbrechender Polyurethanmassen für optische Anwendungen gemeinsam ist aber der erhebliche Nachteil, dass sie mit grossen Mengen niedermolekularer monomerer araliphatischer Diisocyanate arbeiten, die als gesundheitsschädliche, sensibilisierende oder sogar giftige Arbeitsstoffe eingestuft sind und zum Teil einen hohen Dampfdruck aufweisen. Die Verarbeitung dieser monomeren Diisocyanate erfordert aus Gründen der Arbeitshygiene einen großen sicherheitstechnischen Aufwand. Darüberhinaus besteht die Möglichkeit, dass insbesondere bei Verwendung eines Polyisocyanatüberschusses, wie z. B. in EP-A 0 235 743 oder der EP-A 0 506 315 vorgeschlagen, nicht abreagiertes monomeres Diisocyanat für längere Zeit im hergestellten Formteil, z. B. einem Brillenglas, verbleibt und aus diesem langsam ausdampfen kann.

Der Hauptgrund für den Einsatz der araliphatischen Diisocyanate in monomerer Form besteht darin, dass die bekannten monomerenarmen Derivate dieser Diisocyanate bei üblichen Verarbeitungstemperaturen hochviskose oder sogar feste Verbindungen darstellen, die als solche für lösemittelfreie Anwendungen wie zur Herstellung von Vergussmassen nicht geeignet sind. Monomerenarme Polyisocyanate auf Basis araliphatischer Diisocyanate finden heute ausschließlich in organischen Lösungsmitteln gelöst, z. B. für Lacke, Klebstoffe oder Druckfarben, Verwendung.

Aufgabe der vorliegenden Erfindung war es nun, neue hochtransparente, licht- und wetterbeständige Polyurethanmassen mit hoher Lichtbrechung und geringer Dispersion zur Verfügung zu stellen, die nicht die Nachteile der bekannten Systeme aufweisen. Die neuen Polyurethanmassen sollten auf toxikologisch unbedenklichen Rohstoffen basieren und sich nach üblichen Methoden, beispielsweise durch einfaches Vergießen von Hand oder mit Hilfe geeigneter Maschinen, beispielsweise nach dem RIM-Verfahren, zu hochvernetzten transparenten Formkörpern insbesondere für hochwertige optische Anwendungen verarbeiten lassen.

Diese Aufgabe konnte durch die Bereitstellung der nachfolgend näher beschriebenen Polyisocyanatgemische und der aus ihnen erhältlichen Polyurethane gelöst werden.

Die nachfolgend näher beschriebene Erfindung beruht auf der überraschenden Beobachtung, dass lösemittelfreie Gemische aus niedrigviskosen HDI-Polyisocyanaten und monomerenarmen Polyisocyanaten auf Basis araliphatischer Diisocyanate bereits bei relativ geringen Anteilen an HDI-Polyisocyanaten ausreichend niedrige Viskositäten aufweisen, dass sie sich unter üblichen Bedingungen problemlos zu lichtechten, nicht vergilbenden Polyurethankörpern verarbeiten lassen, die sich durch eine hohe Lichtbrechung und gleichzeitig hohe Abbe-Zahl auszeichnen.

Obwohl sich beispielsweise in EP-A 0 329 388 und EP-A 0 378 895, die Verfahren zur Herstellung von Polythiourethan- bzw. Polyurethankunststofflinsen zum Gegenstand haben, neben umfangreichen Listen potentiell als Aufbaukomponenten geeigneter Diisocyanate, die u. a. araliphatische Diisocyanate, wie z. B. XDI, Bis(isocyanatoethyl)benzol, Bis(isocyanatopropyl)benzol, TMXDI, Bis(isocyanatobutyl)benzol, Bis(isocyanatomethyl)naphthalin oder Bis(isocyanatomethyl)diphenylether umfassen, auch der pauschale Hinweis findet, dass Prepolymere, Urethane, Carbodiimide, Harnstoffe, Biurete, Dimerisate und Trimerisate der genannten Diisocyanate ebenfalls geeignete Ausgangspolyisocyanate zur Herstellung von Linsenmaterialien darstellen, konnte der Fachmann diesen Veröffentlichungen keinerlei konkreten Hinweis auf die besondere Eignung der nachfolgend näher beschriebenen monomerarmen Polyisocyanatkomponenten, die aus Mischungen niedrigviskoser HDI-Polyisocyanate mit araliphatischen Polyisocyanaten bestehen, zur Herstellung von Kunststoffmassen mit hohem Brechungsindex entnehmen. Vielmehr wurden die Beispiele all dieser Veröffentlichungen ausschließlich unter Verwendung monomerer Diisocyanate, darunter m-XDI und m-TMXDI, durchgeführt.

Gegenstand der vorliegenden Erfindung sind lösemittelfreie, monomerarme Polyisocyanatgemische A) mit einem Gehalt an Isocyanatgruppen von 11 bis 23 Gew.-%, einer mittleren Isocyanat-Funktionalität von mindestens 2,3 und einem Restgehalt an monomeren Diisocyanaten von weniger als 1 Gew.-%, die zu 5 bis 95 Gew.-% aus mindestens einem Polyisocyanat a-1) auf Basis von Hexamethylendiisocyanat mit einem NCO-Gehalt von 16 bis 24 Gew.-% und zu 5 bis 95 Gew.-% aus mindestens einem Polyisocyanat a-2) auf Basis araliphatischer Diisocyanate mit einem NCO-Gehalt von 10 bis 22 Gew.-%, bestehen.

Gegenstand der Erfindung ist auch ein Verfahren zur Herstellung lichtechter Polyurethanmassen durch lösemittelfreie Umsetzung dieser
A) monomerarmen Polyisocyanatgemische
   mit
B) gegenüber Isocyanatgruppen reaktiven Reaktionspartnern einer mittleren Funktionalität von 2,0 bis 6,0 und gegebenenfalls unter Mitverwendung
C) weiterer Hilfs- und Zusatzmittel,
unter Einhaltung eines Äquivalentverhältnisses von Isocyanatgruppen zu gegenüber Isocyanaten reaktiven Gruppen von 0,5 : 1 bis 2,0 : 1.

Gegenstand der Erfindung ist schließlich auch die Verwendung der so erhältlichen lichtechten Polyurethanmassen zur Herstellung transparenter kompakter oder geschäumter Formkörper.

Bei der erfindungsgemäßen Polyisocyanatkomponente A) handelt es sich um lösemittelfreie Gemische aus 5 bis 95 Gew.-% mindestens eines Polyisocyanats a-1) auf Basis von HDI und 5 bis 95 Gew.-% mindestens eines Polyisocyanats a-2) auf Basis araliphatischer Diisocyanate.

Bei den Polyisocyanaten a-1) handelt es sich um die an sich bekannten Uretdion-, Isocyanurat-, Iminooxadiazindion-, Urethan-, Allophanat-, Biuret- und/oder Oxadiazintriongruppen enthaltende Derivate des HDI, die bei 23°C eine Viskosität von 70 bis 12.000 mPas, einen Gehalt an Isocyanatgruppen von 16 bis 24 Gew.-%, einen Gehalt an monomerem HDI von weniger als 0,5 Gew.-% und eine durchschnittlichen Isocyanat-Funktionalität von mindestens 2,0 aufweisen.

Diese sind beispielhaft in Laas et al., J. Prakt. Chem. 336, 1994, 185-200, DE-A 1 670 666, DE-A 3 700 209, DE-A 3 900 053, EP-A 0 330 966, EP-A 0 336 205, EP-A 0 339 396 und EP-A 0 798 299 beschrieben.

Bevorzugt handelt es sich bei den Polyisocyanaten der Komponente a-1) um Polyisocyanate auf HDI-Basis der vorstehende genannten Art mit Uretdion-, Allophanat-, Isocyanurat- und/oder Iminooxadiazintrionstruktur, die bei 23°C eine Viskosität von 70 bis 1.600 mPas und einen Gehalt an Isocyanatgruppen von 18 bis 24 Gew.-% aufweisen.

Besonders bevorzugt handelt es sich bei den Polyisocyanaten der Komponente a-1) um Uretdiongruppen-, Isocyanuratgruppen- und/oder Iminooxadiazindiongruppen-aufweisende HDI-Polyisocyanate der vorstehend genannten Art mit einer Viskosität bei 23°C von 80 bis 1.500 mPas und einem Gehalt an Isocyanatgruppen von 20 bis 24 Gew.-%.

Bei den Polyisocyanaten der Komponente a-2) handelt es sich um Uretdion-, Isocyanurat-, Iminooxadiazindion-, Urethan-, Allophanat-, Biuret- und/oder Oxadiazintriongruppen enthaltende Polyisocyanate auf Basis araliphatischer Diisocyanate, die bei 23°C in fester Form vorliegen oder eine Viskosität von mehr als 150.000 mPas aufweisen, und deren Gehalt an Isocyanatgruppen von 10 bis 22 Gew.-% und an monomeren araliphatischen Diisocyanaten weniger als 1,0 Gew.-% beträgt.

Geeignete araliphatische Ausgangsdiisocyanate zur Herstellung der Polyisocyanatkomponenten a-2) sind beliebige Diisocyanate, deren Isocyanatgruppen über gegebenenfalls verzweigte aliphatische Reste an einem gegebenenfalls weiter substituierten Aromaten gebunden vorliegen, wie z. B. 1,3-Bis(isocyanatomethyl)benzo 1 ( m-Xylylendiisocyanat, m-XDI), 1,4-Bis(isocyanato-methyl)benzol (p-Xylylendiisocyanat, p-XDI), 1,3-Bis(2-isocyanatopropan-2-yl)benzol (m-Tetramethylxylylendiisocyanat, m-TMXDI), 1,4-Bis(2-isocyanatopropan-2-yl)benzol (p-Tetramethyl-xylylendiisocyanat, p-TMXDI), 1,3-Bis(isocyanatomethyl)-4-methylbenzol, 1,3-Bis(isocyanato-methyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanato-methyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanato-methyl)-2,3,5,6-tetrabrombenzol, 1,4-Bis(2-isocyanatoethyl)benzol, 1,4-Bis(isocyanatomethyl)-naphthalin sowie beliebige Mischungen dieser Diisocyanate.

Die Herstellung der Polyisocyanatkomponenten a2) aus den genannten araliphatischen Diisocyanaten kann nach den üblichen Verfahren zur Oligomerisierung von Diisocyanaten, wie sie z. B. in Laas et al., J. Prakt. Chem. 336, 1994, 185-200 beschrieben sind, und anschließende Abtrennung der nicht umgesetzten monomeren Diisocyanate durch Destillation oder Extraktion erfolgen. Konkrete Beispiele für monomerenarme Polyisocyanate araliphatischer Diisocyanate finden sich beispielsweise in JP-A 2005161691, JP-A 2005162271 und EP-A 0 081 713.

Bevorzugt Polyisocyanate a-2) sind solche mit Uretdion-, Allophanat-, Isocyanurat-, Iminooxadiazindion- und/oder Biuretstruktur.

Besonders bevorzugt handelt es sich bei den Polyisocyanaten a-2) um solche der vorstehend beschriebenen Art auf Basis von m-XDI, p-XDI und/oder m-TMXDI mit einem Gehalt an Isocyanatgruppen von 11 bis 21,5 Gew.-% und einem Gehalt an monomeren Diisocyanaten von weniger als 0,8 %.

Ganz besonders bevorzugte Polyisocyanate der Komponente a-2) sind solche der vorstehend beschriebenen Art auf Basis von m-XDI mit einem Gehalt an Isocyanatgruppen von 15 bis 21 Gew.-% und einem Gehalt an monomerem m-XDI von weniger als 0,5 %.

Sowohl das zur Herstellung der Polyisocyanatkomponente a-1) eingesetzte HDI als auch die genannten araliphatischen Ausgangsdiisocyanate für die Polyisocyanatkomponenten a-2) können nach beliebigen Verfahren, z. B. durch Phosgenierung in der Flüssigphase oder Gasphase oder auf phosgenfreiem Weg, beispielsweise durch Urethanspaltung, hergestellt werden.

Die Herstellung der erfindungsgemäßen Polyisocyanatgemische A) erfolgt durch einfaches Vermischen der gegebenenfalls auf Temperaturen von 30 bis 240° vorgeheizten Einzelkomponenten a-1) und a-2) im oben angegebenen Mengenverhältnis, vorzugsweise unter Einhaltung eines Gewichtsverhältnisses a-1) : a-2) von 90 : 10 bis 10 : 90, besonders bevorzugt 80 : 20 bis 20 : 80, und anschließendes Rühren des Gemisches, bis zur Homogenität, wobei die Temperatur des Gemisches gegebenenfalls durch weiteres Erwärmen auf einer Temperatur von 30 bis 140°C, vorzugsweise 40 bis 100°C gehalten wird.

In einer bevorzugten Ausführungsform lässt man bei der Herstellung der Polyisocyanatgemische A) die bei 23°C hochviskose oder feste Polyisocyanatkomponente a-2) unmittelbar nach ihrer Herstellung, beispielsweise durch Urethanisierung, Allophanatisierung, Biuretisierung und/oder durch katalytische Oligomerisierung araliphatischer Diisocyanate im Anschluss an die Monomerenabtrennung durch Dünnschichtdestillation in noch erwärmtem Zustand, beispielsweise bei Temperaturen von 100 bis 240°C, in die gegebenenfalls ebenfalls erwärmte Polyisocyanatkomponente a-1) einfließen und rührt, gegebenenfalls unter weiterem Erwärmen bis zur Homogenität der Mischung.

In einer anderen, ebenfalls bevorzugten Ausführungsform rührt man bei der Herstellung der Polyisocyanatgemische A) die Polyisocyanatkomponente a-1) in die bei der Herstellung der Polyisocyanatkomponente a-2) am Ende der Reaktion vorliegende Rohlösung noch vor der Dünnschichtdestillation ein und trennt erst anschliessend die überschüssigen monomeren araliphatischen Diisocyanate ab.

Unabhängig von der Art ihrer Herstellung fallen die Polyisocyanatgemische A) in der Regel als klare, praktisch farblose Harze an, deren Viskosität bei 23°C vorzugsweise von 4.000 bis 100.000 mPas, besonders bevorzugt von 6.000 bis 60.000 mPas, deren Gehalt an Isocyanatgruppen vorzugsweise von 12 bis 23 Gew.-%, besonders bevorzugt von 16 bis 22 Gew.-%, und deren mittlere Isocyanat-Funktionalität vorzugsweise von 2,5 bis 5,0, besonders bevorzugt 3,0 bis 4,5, beträgt. Die Polyisocyanatgemische A) sind arm an Restmonomeren, da sie einen Restgehalt an monomeren Diisocyanaten (Summe aus monomerem HDI und monomeren araliphatischen Diisocyanaten) von weniger als 1 Gew.-%, vorzugsweise weniger als 0,5 Gew.-%, besonders bevorzugt weniger als 0,3 Gew.-% aufweisen.

Zur Herstellung lichtechter Polyurethanmassen, werden die vorstehend beschriebenen erfindungsgemäßen Polyisocyanatgemische A) mit beliebigen lösemittelfreien gegenüber Isocyanatgruppen reaktiven Reaktionspartnern B) umgesetzt, die eine im Sinne der Isocyanat-Additionsreaktion mittlere Funktionalität von 2,0 bis 6,0, vorzugsweise von 2,5 bis 4,0, besonders bevorzugt von 2,5 bis 3,5 aufweisen.

Hierbei handelt es sich insbesondere um die üblichen aus der Polyurethanchemie bekannten Polyetherpolyole, Polyesterpolyole, Polyetherpolyesterpolyole, Polythioetherpolyole, polymermodifizierte Polyetherpolyole, Pfropfpolyetherpolyole, insbesondere solche auf Styrol- und/oder Acrylnitrilbasis, Polyetherpolyamine, hydroxylgruppenhaltigen Polyacetale und/oder hydroxylgruppenhaltigen aliphatischen Polycarbonate, die üblicherweise ein Molekulargewicht von 106 bis 12000, vorzugsweise 250 bis 8000 aufweisen. Ein breiter Überblick über geeignete Reaktionspartner B) findet sich beispielsweise in N. Adam et al.: "Polyurethanes", Ullmann's Encyclopedia of Industrial Chemistry, Electronic Release, 7th ed., chap. 3.2 - 3.4, Wiley-VCH, Weinheim 2005.

Geeignete Polyetherpolyole B) sind beispielsweise solche der in der DE-A 2 622 951, Spalte 6, Zeile 65 - Spalte 7, Zeile 47, oder der EP-A 0 978 523 Seite 4, Zeile 45 bis Seite 5, Zeile 14 genannten Art, sofern sie den oben gemachten Angaben hinsichtlich Funktionalität und Molekulargewicht entsprechen. Besonders bevorzugte Polyetherpolyole B) sind Anlagerungsprodukte von Ethylenoxid und/oder Propylenoxid an Glycerin, Trimethylolpropan, Ethylendiamin und/oder Pentaerythrit.

Geeignete Polyesterpolyole B) sind beispielsweise solche der in der EP-A 0 978 523 Seite 5, Zeilen 17 bis 47 oder der EP-A 0 659 792 Seite 6, Zeilen 8 bis 19 genannten Art, sofern sie den oben gemachten Angaben entsprechen, bevorzugt solche, deren Hydroxylzahl von 20 bis 650 mg KOH/g beträgt.

Geeignete Polythiopolyole B) sind beispielsweise die bekannten Kondensationsprodukte von Thiodiglykol mit sich selbst oder anderen Glykolen, Dicarbonsäuren, Formaldehyd, Aminocarbonsäuren und/oder Aminoalkoholen. Je nach Art der eingesetzten Mischkomponenten handelt es sich bei diesen um Polythiomischetherpolyole, Polythioetheresterpolyole oder Polythioetheresteramidpolyole.

Als Komponente B) geeignete Polyacetalpolyole sind beispielsweise die bekannten Umsetzungsprodukte einfacher Glykole, wie z. B. Diethylenglykol, Triethylenglykol, 4,4'-Dioxethoxy-diphenyl-dimethylmethan (Addukt von 2 mol Ethylenoxid an Bisphenol A) oder Hexandiol, mit Formaldehyd oder auch durch Polykondensation cyclischer Acetale, wie z. B. Trioxan, hergestellte Polyacetale.

Darüber hinaus sind als Komponente B) auch Aminopolyether oder Gemische von Aminopolyethern gut geeignet, d. h. Polyether mit gegenüber Isocyanatgruppen reaktionsfähigen Gruppen, die sich zumindest zu 50 Äquivalent-%, vorzugsweise zumindest zu 80 Äquivalent-%, aus primären und/oder sekundären, aromatisch oder aliphatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-A 0 081 701, Spalte 4, Zeile 26 bis Spalte 5, Zeile 40, genannten Verbindungen. Ebenfalls als Ausgangskomponente E) geeignet sind aminofunktionelle Polyetherurethane oder -harnstoffe, wie sie sich beispielsweise nach dem Verfahren der DE-A 2 948 419 durch Hydrolyse von isocyanatfunktionellen Polyetherprepolymeren herstellen lassen oder auch Aminogruppen aufweisende Polyester des obengenannten Molekulargewichtsbereichs.

Weitere geeignete gegenüber Isocyanatgruppen reaktive Komponenten B) sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole.

Auch Hydroxylgruppen enthaltende Polybutadiene können können gegebenenfalls als Komponente B) eingesetzt werden.

Zur Herstellung von Polyurethanmassen ganz besonders hoher Lichtbrechung eignen sich als gegenüber Isocyanatgruppen reaktive Komponenten B) insbesondere auch Polythioverbindungen, beispielsweise einfache Alkanthiole, wie z. B. Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol und 2-Methylcyclohexan-2,3-dithiol, Thioethergruppen enthaltende Polythiole, wie z. B. 2,4-Dimercaptomethyl-1,5-dimercapto-3-thiapentan, 4-Mercaptomethyl-1,8-dimercapto-3,6-dithiaoctan, 4,8-Dimercaptomethyl-1,11-dimercapto-3,6,9-trith i au n d e can, 4, 7-Dimercaptomethyl-1,11-dimercapto-3,6,9-trithiaundecan, 5,7-Dimercaptomethyl-1,11-dimercapto-3,6,9-trithiaundecan, 4,5-Bis(mercaptoethylthio)-1,10-dimercapto-3,8-dithiadecan, Tetrakis(mercaptomethyl)methan, 1,1,3,3-Tetrakis(mercaptome-thylthio)propan, 1,1,5,5-Tetrakis(mercaptomethylthio)-3-thiapentan, 1,1,6,6-Tetrakis(mercaptomethylthio)-3,4-dithiahexan, 2-Mercaptoethylthio-1,3-dimercaptopropan, 2,3-Bis(mercaptoethylthio)-1-mercaptopropan, 2,2-Bis(mercaptomethyl)-1,3-dimercaptopropan, Bis(mercaptomethyl)sulfid, Bis(mercaptomethyl)disulfid, Bis(mercaptoethyl)sulfid, Bis(mercaptoethyl)disulfid, Bis(mercaptopropyl)sulfid, Bis(mercaptopropyl)disulfid, Bis(mercaptomethylthio)methan, Tris-(mercaptomethylthio)methan, Bis(mercaptoethylthio)methan, Tris(mercaptoethylthio)methan, Bis-(mercaptopropylthio)methan, 1,2-Bis(mercaptomethylthio)ethan, 1,2-Bis(mercaptoethylthio)ethan, 2-Mercaptoethylthio)ethan, 1,3-Bis(mercaptomethylthio)propan, 1,3-Bis(mercaptopropylthio)-propan, 1,2,3-Tris(mercaptomethylthio)propan, 1,2,3-Tris(mercaptoethylthio)propan, 1,2,3-Tris-(mercaptopropylthio)propan, Tetrakis(mercaptomethylthio)methan, Tetrakis(mercaptoethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian und 2-(3-Bis(mercaptomethyl)-2-thiapropyl)-1,3-dithiolan, Polyesterthiole, wie z. B. Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-1,2-propandiol-bis(2-mercaptoacetat), 3-Mercapto-1,2-propandiol-bis(3-mercaptopropionat), Trimethylolpropan-tris(2-mercaptoacetat), Trimethylolpropan-tris(3-mercaptopropionat), Trimethylolethan-tris(2-mercaptoacetat), Trimethylolethan-tris(3-mercaptopropionat), Pentaerythrit-tetrakis(2-mercaptoacetat), Pentaerythrit-tetrakis(3-mercapto-propionat), Glycerin-tris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxymethylsulfid-bis(2-mercaptoacetat), Hydroxymethylsulfid-bis(3-mercaptopropionat), Hydroxyethylsulfid(2-mercaptoacetat), Hydroxyethylsulfid(3-mercaptopropionat), Hydroxymethyldisulfid(2-mercaptoacetat), Hydroxymethyldisulfid(3-mercaptopropionat), (2-Mercaptoethylester)thioglycolat und Bis(2-mercaptoethylester)thiodipropionat sowie aromatische Thioyerbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris(mercaptomethyl)benzol, 1,2,4-Tris(mercaptomethyl)benzol, 1,3,5-Tris(mercaptomethyl)benzol, 1,2,3-Tris-(mercaptoethyl)benzol, 1,3,5-Tris(mercaptoethyl)benzol, 1,2,4-Tris(mercaptoethyl)benzol, 2,5-Toluoldithiol, 3,4-Toluoldithiol, 1,4-Naphthalindithiol, 1,5-Naphthalindithiol, 2,6-Naphthalindithiol, 2,7-Naphthalindithiol, 1,2,3,4-Tetramercaptobenzol, 1,2,3,5-Tetramercaptobenzol, 1,2,4,5-Tetramercaptobenzol, 1,2,3,4-Tetrakis(mercaptomethyl)benzol, 1,2,3,5-Tetrakis(mercaptomethyl)-benzol, 1,2,4,5-Tetrakis(mercaptomethyl)benzol, 1,2,3,4-Tetrakis(mercaptoethyl)benzol, 1,2,3,5-Tetrakis(mercaptoethyl)benzol, 1,2,4,5-Tetrakis(mercaptoethyl)benzol, 2,2'-Dimercaptobiphenyl und 4,4'-Dimercaptobiphenyl.

Bevorzugte Polythioverbindungen B) sind Polythioether- und Polyesterthiole der genannnten Art. Besonders bevorzugte Polythioverbindungen B) sind 4-Mercaptomethyl-l,8-dimercapto-3,6-dithiaoctan, 2,5-Bismercaptomethyl-1,4-dithian, 1,1,3,3-Tetrakis(mercaptomethylthio)propan, 5,7-Dimercaptomethyl-1,11-dimercapto-3,6,9-trithiaundecan, 4,7-Dimercaptomethyl-1,11-dimercapto3,6,9-trithiaundecan, 4,8-Dimercaptomethyl-1,11-dimercapto-3,6,9-trithiaundecan, Trimethylolpropan-tris(3-mercaptopropionat), Trimethylolethan-tris(2-mercaptoacetat), Pentaerythrit-tetrakis-(2-mercaptoacetat) und Pentaerythrit-tetrakis(3-mercaptopropionat).

Darüber hinaus sind als gegenüber Isocyanatgruppen reaktive Komponenten B) auch Schwefel enthaltende Hydroxyverbindungen geeignet. Beispielhaft seien hier genannt einfache Mercaptoalkohole, wie z. B. 2-Mercaptoethanol, 3-Mercaptopropanol, 1,3-Dimercapto-2-propanol, 2,3-Dimercaptopropanol und Dithioerythritol, Thioetherstrukturen enthaltende Alkohole, wie z. B. Di(2-hydroxyethyl)sulfid, 1,2-Bis(2-hydroxyethylmercapto)ethan, Bis(2-hydroxyethyl)disulfid und 1,4-Dithian-2,5-diol, oder Schwefel enthaltende Diole mit Polyesterurethan-, Polythioesterurethan-, Polyesterthiourethan- oder Polythioesterthiourethanstruktur der in der EP-A 1 640 394 genannten Art.

Bei der Herstellung der erfindungsgemäßen lichtechten Polyurethanmassen können als gegenüber Isocyanaten reaktive Verbindungen B) auch niedermolekulare, hydroxy- und/oder aminofunktionelle Komponenten, d. h. solche eines Molekulargewichtsbereiches von 60 bis 500, vorzugsweise von 62 bis 400, zum Einsatz kommen.

Hierbei handelt es sich beispielsweise um einfache ein- oder mehrwertige Alkohole mit 2 bis 14, vorzugsweise 4 bis 10 Kohlenstoffatomen, wie z. B. 1,2-Ethandiol, 1,2- und 1,3-Propandiol, die isomeren Butandiole, Pentandiole, Hexandiole, Heptandiole und Octandiole, 1,10-Decandiol, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis-(hydroxymethyl)-1,3-propandiol, Bis-(2-hydroxyethyl)-hydrochinon, 1,2,4- und 1,3,5-Trihydroxycyclohexan oder 1,3,5-Tris(2-hydroxyethyl)-isocyanurat.

Beispiele für geeignete niedermolekulare aminofunktionelle Verbindungen sind beispielsweise aliphatische und cycloaliphatische Amine und Aminoalkohole mit primär und/oder sekundär gebundenen Aminogruppen, wie z. B. Cyclohexylamin, 2-Methyl-1,5-pentandiamin, Diethanolamin, Monoethanolamin, Propylamin, Butylamin, Dibutylamin, Hexylamin, Monoisopropanolamin, Diisopropanolamin, Ethylendiamin, 1,3-Diaminopropan, 1,4-Diaminobutan, Isophorondiamin, Diethylentriamin, Ethanolamin, Aminoethylethanolamin, Diaminocyclohexan, Hexamethylendiamin, Methyliminobispropylamin, Iminobispropylamin, Bis(aminopropyl)piperazin, Aminoethylpiperazin, 1,2-Diaminocyclohexan, Triethylentetramin, Tetraethylenpentamin, 1,8-p-Diaminomenthan, Bis(4-aminocyclohexyl)methan, Bis(4-amino-3-methylcyclohexyl)methan, Bis(4-amino-3,5-dimethylcyclohexyl)methan, Bis(4-amino-2,3,5-trimethylcyclohexyl)methan, 1,1-Bis(4-aminocyclohexyl)propan, 2,2-Bis(4-aminocyclohexyl)propan, 1,1-Bis(4-aminocyclohexyl)ethan, 1,1-Bis-(4-aminocyclohexyl)butan, 2,2-Bis(4-aminocyclohexyl)butan, 1,1-Bis(4-amino-3-methylcyclohexyl)ethan, 2,2-Bis(4-amino-3-methylcyclohexyl)propan, 1,1-Bis(4-amino-3,5-dimethylcyclohexyl)ethan, 2,2-Bis(4-amino-3,5-dimethylcyclohexyl)propan, 2,2-Bis(4-amino-3,5-dimethylcyclohexyl)butan, 2,4-Diaminodicyclohexylmethan, 4-Aminocyclohexyl-4-amino-3-methylcyclohexylmethan, 4-Amino-3,5-dimethylcyclohexyl-4-amino-3-methylcyclohexylmethan und 2-(4-Aminocyclohexyl)-2-(4-amino-3-methylcyclohexyl)methan.

Beispiele für aromatische Polyamine, insbesondere Diamine, mit Molekulargewichten unter 500, die geeignete gegenüber Isocyanaten reaktive Verbindungen B) darstellen, sind z. B. 1,2- und 1,4-Diaminobenzol, 2,4- und 2,6-Diaminotoluol, 2,4'- und/oder 4,4'-Diaminodiphenylmethan, 1,5-Diaminonaphthalin, 4,4',4"-Triaminotriphenylmethan, 4,4'-Bis-(methylamino)-diphenylmethan oder 1-Methyl-2-methylamino-4-aminobenzol. 1-Methyl-3,5-diethyl-2,4-diaminobenzol, 1-Methyl-3,5-diethyl-2,6-diaminobenzol, 1,3,5-Trimethyl-2,4-diaminobenzol, 1,3,5-Triethyl-2,4-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 3,3'-Diethyl-5,5'-diisopropyl-4,4'-diaminodiphenylmethan, 1-Methyl-2,6-diamino-3-isopropylbenzol, flüssige Gemische von Polyphenylpolymethylenpolyaminen, wie sie auf bekannte Weise durch Kondensation von Anilin mit Formaldehyd erhältlich sind, sowie beliebige Mischungen solcher Polyamine. In diesem Zusammenhang seien beispielsweise Mischungen von 1-Methyl-3,5-diethyl-2,4-diaminobenzol mit 1-Methyl-3,5-diethyl-2,6-diaminobenzol in einem Gewichtsverhältnis von 50 : 50 bis 85 : 15, vorzugsweise von 65 : 35 bis 80 : 20 besonders erwähnt.

Die Verwendung niedermolekularer aminofunktioneller Polyether mit Molekulargewichten unter 500 ist ebenfalls möglich. Hierbei handelt es sich beispielsweise um solche mit primären und/oder sekundären, aromatisch oder aliphatisch gebundenen Aminogruppen, deren Aminogruppen gegebenenfalls über Urethan- oder Estergruppen an die Polyetherketten angebunden sind und die nach bekannten, bereits oben zur Herstellung der höhermolekularen Aminopolyether beschriebenen Verfahren zugänglich sind.

Gegebenenfalls können auch sterisch gehinderte aliphatische Diamine mit zwei sekundär gebundenen Aminogruppen als gegenüber Isocyanatgruppen reaktive Komponenten B) eingesetzt werden, wie z. B. die aus EP-A 0 403 921 bekannten Umsetzungsprodukte aliphatischer und/oder cycloaliphatischer Diamine mit Maleinsäure- oder Fumarsäureestern, das gemäß der Lehre der EP-A 1 767 559 erhältliche Bisaddukt von Acrylnitril an Isophorondiamin oder die beispielsweise in der DE-A 19 701 835 beschriebenen Hydrierungsprodukte aus aliphatischen und/oder cycloaliphatischen Diaminen und Ketonen, wie z. B. Diisopropylketon, zugänglicher Schiffscher Basen.

Bevorzugte Reaktionspartner B) für die erfindungsgemäßen Polyisocyanatgemische A) sind die vorstehend genannten polymeren Polyetherpolylole, Polyesterpolyole und/oder Aminopolyether, die genannten Polythioverbindungen, niedermolekularen aliphatischen und cycloaliphatischen mehrwertigen Alkohole sowie die genannten niedermolekularen mehrwertigen Amine, insbesondere sterisch gehinderte aliphatische Diamine mit zwei sekundär gebundenen Aminogruppen.

Als Reaktionspartner für die erfindungsgemäßen Polyisocyanatgemische A) eignen sich auch beliebige Gemische der vorstehend beispielhaft genannten gegenüber Isocyanatgruppen reaktiven Komponenten B). Während unter Verwendung ausschließlich hydroxyfunktioneller Komponenten B) reine Polyurethanmassen, unter ausschließlicher Verwendung von Thioverbindungen B) reine Polythiourethane und unter ausschließlicher Verwendung von Polyaminen B) reine Polyharnstoffmassen erhalten werden, lassen sich unter Verwendung von Aminoalkoholen, Mercaptoalkoholen oder geeigneter Gemische von hydroxy-, mercapto- und aminofunktionellen Verbindungen als Komponente B) Polyadditionsverbindungen herstellen, in denen sich das Äquivalentverhältnis von Urethan- zu Thiourethan- und/oder Harnstoffgruppen beliebig einstellen lässt.

Die erfindungsgemäßen Polyisocyanatkomponenten A), die aus lösemittelfreien Polyisocyanaten auf Basis von HDI und solchen auf Basis araliphatischer Diisocyanate bestehen, kommen bei der Herstellung von lichtechten Polyurethanmassen in der Regel als alleinige Polyisocyanatkomponente zum Einsatz. Grundsätzlich ist es jedoch auch möglich, die Polyisocyanatkomponenten A) in Abmischung mit beliebigen weiteren lösemittelfreien monomerarmen Polyisocyanaten einzusetzen, beispielsweise den aus EP-A 0 693 512 und EP-A 1 484 350 bekannten Lösungen cycloaliphatischer Polyisocyanate in niedrigviskosen HDI-Polyisocyanaten, den in EP-A 0 047 452 und EP-A 0 478 990 beschriebenen, durch Dimerisierung und/oder Trimerisierung aus Gemischen von HDI und Isophorondiisocyanat erhältlichen Polyisocyanaten oder auch Polyester-modifizierten HDI-Polyisocyanaten, der aus EP-A 0 336 205 bekannten Art.

Unabhängig von der Art der gewählten Ausgangsstoffe erfolgt die Umsetzung der erfindungsgemäßen Polyisocyanatgemische A) mit den gegenüber Isocyanatgruppen reaktiven Komponenten B) unter Einhaltung eines Äquivalentverhältnisses von Isocyanatgruppen zu gegenüber Isocyanaten reaktiven Gruppen von 0,5 : 1 bis 2,0 : 1, vorzugsweise von 0,7 : 1 bis 1,3 : 1, besonders bevorzugt von 0,8 : 1 bis 1,2 : 1.

Neben den genannten Ausgangskomponeten A) und B) können dabei gegebenenfalls weitere Hilfs- und Zusatzmittel C), wie z. B. Katalysatoren, Treibmittel, oberflächenaktive Mittel, UV-Stabilisatoren, Schaumstabilisatoren, Antioxidantien, Formtrennmittel, Füllstoffe und Pigmente, mitverwendet werden.

Zur Reaktionsbeschleunigung können beispielsweise übliche aus der Polyurethanchemie bekannte Katalysatoren zum Einsatz kommen. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undecen-7 (DBU), 1,2-Dimethylimidazol, 2-Methylimidazol, N,N-Dimethylimidazol-β-phenylethylamin, 1,4-Diazablcyclo-(2,2,2)-octan, Bis-(N,N-dimethylaminoethyl)adipat; Alkanolaminverbindungen, wie z. B. Triethanolamin, Triisopropanolamin, N-Methylu n d N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N, N',N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat; Amidine, wie z. B. 2,3-Dimethyl-3,4,5,6-tetrahydropyrimidin; Tetraalkylammoniumhydroxide, wie z. B. Tetramethylammoniumhydroxid; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugte einzusetzende Katalysatoren C) sind tertiäre Amine, Bismuth- und Zinnverbindungen der genannten Art.

Die beispielhaft genannten Katalysatoren können bei der Herstellung der erfindungsgemäßen lichtechten Polyurethan-, Polythiourethan- und/oder Polyharnstoffinassen einzeln oder in Form beliebiger Mischungen untereinander eingesetzt werden und kommen dabei gegebenenfalls in Mengen von 0,01 bis 5,0 Gew.-%, bevorzugt 0,1 bis 2 Gew.-%, berechnet als Gesamtmenge an eingesetzten Katalysatoren bezogen auf die Gesamtmenge der verwendeten Ausgangsverbindungen, zum Einsatz.

Nach dem erfindungsgemäßen Verfahren werden vorzugsweise transparente kompakte Formteile mit hohem Brechungsindex hergestellt. Durch Zusatz geeigneter Treibmittel lassen sich, wenn gewünscht, aber auch geschäumte Formkörper erhalten. Hierfür geeignete Treibmittel sind beispielsweise leicht flüchtige organische Substanzen, wie z.B. Aceton, Ethylacetat, halogensubstituierte Alkane, wie Methylenchlorid, Chloroform, Ethylidenchlorid, Vinylidenchlorid, Monofluortrichlormethan, Chlortrifluormethan oder Dichlordifluormethan, Butan, Hexan, Heptan oder Diethylether und/oder gelöste inerte Gase, wie z.B. Stickstoff, Luft oder Kohlendioxid.

Als chemische Treibmittel C), d. h. Treibmittel die aufgrund einer Reaktion, beispielsweise mit Isocyanatgruppen, gasförmige Produkte bilden, kommen beispielsweise Wasser, Hydratwasser enthaltende Verbindungen, Carbonsäuren, tert.-Alkohole, z. B. t-Butanol, Carbamate, beispielsweise die in der EP-A 1 000 955, insbesondere auf den Seiten 2, Zeilen 5 bis 31 sowie Seite 3, Zeilen 21 bis 42 beschriebenen Carbamate, Carbonate, z. B. Ammoniumcarbonat und/oder Ammoniumhydrogencarbonat und/oder Guanidincarbamat in Betracht. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Erfindungsgemäß können auch oberflächenaktive Zusatzstoffe C) als Emulgatoren und Schaumstabilisatoren mitverwendet werden. Geeignete Emulgatoren sind beispielsweise die Natriumsalze von Ricinusölsulfonaten oder Fettsäuren, Salze von Fettsäuren mit Aminen, wie z. B. ölsaures Diethylamin oder stearinsaures Diethanolamin. Auch Alkali- oder Ammoniumsalze von Sulfonsäuren, wie z. B. von Dodecylbenzolsulfonsäuren, Fettsäuren, wie z. B. Ricinolsäure, oder polymeren Fettsäuren, oder ethoxyliertes Nonylphenol können als oberflächenaktive Zusatzstoffe mitverwendet werden.

Geeignete Schaumstabilisatoren sind insbesondere die bekannten, vorzugsweise wasserlöslichen Polyethersiloxane, wie sie beispielsweise US-A 2 834 748, DE-A 1 012 602 und DE-A 1 719 238 beschrieben sind. Auch die gemäß DE-A 2 558 523 erhältlichen über Allophanatgruppen verzweigte Polysiloxan-Polyoxyalkylen-Copolymere stellen geeignete Schaumstabilisatoren dar.

Die vorstehend genannten, beim erfindungsgemäßen Verfahren gegebenenfalls mitzuverwendenden Emulgatoren und Stabilisatoren können sowohl einzeln als auch in beliebigen Kombinationen untereinander zum Einsatz kommen.

Die aus den erfindungsgemäß herstellbaren bzw. verwendbaren Polyurethanmassen erhaltenen Körper zeichnen sich bereits als solche, d. h. ohne Zusatz entsprechender Stabilisatoren, durch eine sehr gute Lichtbeständigkeit aus. Dennoch können bei ihrer Herstellung gegebenenfalls UV-Schutzmittel (Lichtstabilisatoren) oder Antioxidantien der bekannten Art als weitere Hilfs- und Zusatzmittel C) mitverwendet werden.

Geeignete UV-Stabilisatoren C) sind beispielsweise Piperidinderivate, wie z. B. 4-Benzoyloxy-2,2,6,6-tetramethylpiperidin, 4-Benzoyloxy-1,2,2,6,6-pentamethylpiperidin, Bis-(2,2,6,6-tetramethyl-4-piperidyl)sebacat, Bis(1,2,2,6,6-pentamethyl-4-piperidyl)sebacat, Methyl(1,2,2,6,6-pentamethyl-4-piperidyl)sebacat, Bis-(2,2,6,6-tetramethyl-4-piperidyl)-suberat oder Bis-(2,2,6,6-tetramethyl-4-piperidyl)-dodecandioat, Benzophenonderivate, wie z. B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon, Benztriazolderivate, wie z. B. 2-(5-Methyl-2-hydroxyphenyl)benztriazol, 2-(5-tert.-Butyl-2-hydroxyphenyl)benztriazol, 2-(5-tert.-Octyl-2-hydroxyphenyl)benz-triazol, 2-(5-Dodecyl-2-hydroxyphenyl)benztriazol, 2-(3,5-Di-tert.-butyl-2-hydroxyphenyl)-5-chlorbenztriazol, 2-(3,5-Di-tert.-amyl-2-hydroxyphenyl)benztriazol, 2-(3,5-Di-tert.-butyl-2-hydroxyphenyl)benztriazol, 2-(3-tert.-Butyl-5-methyl-2-hydroxyphenyl)-5-chlorbenztriazol und Veresterungsprodukte von 2-(3-tert.-Butyl-5-propionsäure-2-hydroxyphenyl)benztriazol mit Polyethylenglykol 300, Oxalanilide, wie z. B. 2-Ethyl-2'-ethoxy- oder 4-Methyl-4'-methoxyoxalanilid, Salicylsäureester, wie z. B. Salicylsäurephenylester, Salicylsäure-4-tert.-butylphenylester und Salicylsäure-4-tert.-octylphenylester, Zimtsäureesterderivate, wie z. B. α-Cyano-β-methyl-4-methoxyzimtsäuremethylester, α-Cyano-β-methyl-4-meth-oxyzimtsäurebutylester, α-Cyano-β-phenylzimtsäureethylester und α-Cyano-β-phenylzimtsäureisooctylester, oder Malonesterderivate, wie z. B. 4-Methoxy-benzylidenmalonsäuredimethylester, 4-Methoxybenzylidenmalonsäurediethylester und 4-Butoxy-benzylidenmalonsäuredimethylester. Diese Lichtstabilisatoren können sowohl einzeln als auch in beliebigen Kombinationen untereinander zum Einsatz kommen.

Geeignete Antioxidantien C) sind beispielsweise die bekannten sterisch gehinderten Phenole, wie z. B. 2,6-Di-tert-butyl-4-methylphenol (Ionol), Pentaerythrit-tetrakis(3-(3,5-di-tert-butyl-4-hydroxyphenyl)propionat), Octadecyl-3-(3,5-di-tert-butyl-4-hydroxyphenyl)-propionat, Triethylenglykol-bis(3-tert-butyl-4-hydroxy-5-methylphenyl)propionat, 2,2'-Thio-bis(4-methyl-6-tert-butylphenol), 2,2'-Thiodiethyl-bis[3-(3,5-di-tert-butyl-4-hydroxyphenyl)propionat), die sowohl einzeln als auch in beliebigen Kombinationen untereinander zum Einsatz kommen.

Weitere, gegebenenfalls mitzuverwendende Hilfs- und Zusatzmittel C) sind beispielsweise Zellregler der an sich bekannten Art, wie z. B. Paraffine oder Fettalkohole, die bekannten Flammschutzmittel, wie z.B. Tris-chlorethylphosphat, Ammoniumphosphat oder -polyphosphat, Füllstoffe, wie z. B. Bariumsulfat, Kieselgur, Russ, Schlämmkreide oder auch verstärkend wirkende Glasfasern. Schließlich können beim erfindungsgemäßen Verfahren gegebenenfalls auch die an sich bekannten inneren Formtrennmittel Farbstoffe, Pigmente, Hydrolyseschutzmittel, fungistatische und bakteriostatisch wirkende Substanzen mitverwendet werden.

Die genannte, gegebenenfalls mitzuverwendende Hilfs- und Zusatzmittel C) können sowohl der erfindungsgemäßen Polyisocyanatkompente A) und/oder der gegenüber Isocyanatgruppen reaktiven Komponente B) zugemischt werden.

Die erfindungsgemäßen, aus Gemischen niedrigviskoser HDI-Polyisocyanate und fester bzw. hochviskoser araliphatischer Polyisocyanate bestehenden monomerenarmen Polyisocyanatkomponenten A) stellen wertvolle Ausgangsmaterialien zur Herstellung von Polyurethan-Kunststoffen nach dem Isocyanat-Polyadditionsverfahren dar.

Sie können aufgrund ihrer vergleichsweise niedrigen Viskosität lösemittelfrei verarbeitet werden, lassen sich bei Bedarf aber auch mit üblichen inerten, aus der Polyurethanchemie bekannten Lösemitteln trübungsfrei verdünnen und in dieser Form beispielsweise für Lack- und Klebstoffanwendungen einsetzen.

Zur Herstellung lichtechter Körper aus Polyurethanmassen wird die erfindungsgemäße Polyisocyanatkompente A) mit der gegenüber Isocyanatgruppen reaktiven Komponente B), gegebenenfalls unter Mitverwendung der vorstehend genannten Hilfs- und Zusatzmittel C), in lösemittelfreier Form im oben angegebenen Äquivalentverhältnis von Isocyanatgruppen zu gegenüber Isocyanaten reaktiven Gruppen mit Hilfe geeigneter Mischaggregate gemischt und nach beliebigen Methoden, in offenen oder geschlossenen Formen, beispielsweise durch einfaches Vergießen von Hand, bevorzugt aber mit Hilfe geeigneter Maschinen, wie z. B. den in der Polyurethantechnologie üblichen Niederdruck- oder Hochdruckmaschinen oder nach dem RIM-Verfahren, bei einer Temperatur von bis zu 180°C, vorzugsweise von 20 bis 140°C, besonders bevorzugt von 40 bis 100°C, und gegebenenfalls unter einem erhöhten Druck von bis zu 300 bar, vorzugsweise bis 100 bar, besonders bevorzugt bis zu 40 bar ausgehärtet.

Dabei können die Ausgangskomponenten A) und B) zur Verringerung der Viskositäten gegebenenfalls auf eine Temperatur von bis zu 120°C, vorzugsweise bis zu 100°C, besonders bevorzugt bis zu 90°C, vorgeheizt und gegebenenfalls durch Anlegen von Vakuum entgast werden.

In der Regel können die so aus den erfindungsgemäß hergestellten bzw. verwendbaren Polyurethanmassen gefertigten Körper nach kurzer Zeit, beispielsweise nach einer Zeit von 2 bis 60 min, entformt werden. Gegebenenfalls kann sich eine Nachhärtung bei einer Temperatur von 50 bis 100 °C, vorzugsweise bei 60 bis 90°C, anschließen.

Auf diese Weise erhält man kompakte oder geschäumte, licht- und wetterbeständige Polyurethankörper, die sich durch eine hohe Beständigkeit gegenüber Lösungsmitteln und Chemikalien sowie hervorragende mechanische Eigenschaften, insbesondere eine excellente Wärmeformbeständigkeit auch bei höheren Temperaturen von beispielsweise 90°C, auszeichnen.

Bevorzugt finden die erfindungsgemäßen Polyisocyanatgemische A) zur Herstellung kompakter transparenter Formkörper Verwendung. Diese transparenten Polyurethankörper eignen sich für eine Vielzahl unterschiedlicher Anwendungen, beispielsweise zur Herstellung von bzw. als Glasersatz-Scheiben, wie z. B. Sonnendächern, Front-, Heck- oder Seitenscheiben im Fahrzeug- oder Flugzeugbau, sowie als Sicherheitsglas.

Die erfindungsgemäßen Polyurethanmassen eignen sich darüberhinaus auch hervorragend zum transparenten Verguss optischer, elektronischer oder optoelektronischer Bauteile, wie z. B. von Solarmodulen, Leuchtdioden oder von Linsen oder Kollimatoren, wie sie beispielsweise als Vorsatzoptik in LED-Leuchten oder Automobilscheinwerfern zum Einsatz kommen.

Bevorzugtes Einsatzgebiet für die aus den erfindungsgemäßen Polyisocyanatgemischen A) erhältlichen Polyurethanmassen ist aber die Herstellung leichtgewichtiger Kunststoff-Brillengläser mit hohem Brechungsindex und hoher Abbe-Zahl. Erfindungsgemäß hergestellte Brillengläser zeichnen sich durch hervorragende mechanische Eigenschaften, insbesondere Härte und Schlagfestigkeit sowie gute Kratzfestigkeit aus und sind darüber hinaus leicht zu bearbeiten und beliebig einfärbbar.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

OH-Zahlen wurden titrimetrisch in Anlehnung an DIN 53240 T.2, Säure-Zahlen nach DIN 3682 bestimmt.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Die Glasübergangstemperatur Tg wurde mittels DSC (Differential Scanning Calorimetrie) mit einem Mettler DSC 12E (Mettler Toledo GmbH, Giessen, DE) bei einer Aufheizgeschwindigkeit von 20 °C/min bestimmt.

Shore-Härten wurden nach DIN 53505 mit Hilfe eines Shore-Härteprüfgerätes Zwick 3100 (Fa. Zwick, DE) gemessen.

Die Messung der Brechungsindices und Abbe-Zahlen erfolgte an einem Abbe-Refraktometer Modell B der Fa. Zeiss.

### Ausgangsverbindungen

### Polyisocyanat a1 - I)

Isocyanuratgruppen enthaltendes HDI-Polyisocyanat, hergestellt in Anlehnung an Beispiel 11 der EP-A 330 966, mit der Änderung, dass als Katalysatorlösemittel 2-Ethylhexanol statt 2-Ethyl-1,3-hexandiol eingesetzt wurde.

| | |
|---|---|
| NCO-Gehalt: | 22,9 % |
| NCO-Funktionalität: | 3,2 |
| Monomeres HDI: | 0,1 % |
| Viskosität (23°C): | 1.200 mPas |

### Polyisocyanat a1 - II)

Isocyanurat- und Iminoxadiazindiongruppen enthaltendes HDI-Polyisocyanat, hergestellt in Anlehnung an Beispiel 4 der EP-A 0 962 455, durch Trimeriserung von HDI unter Verwendung einer 50 %-igen Lösung von Tetrabutylphosphoniumhydrogendifluorid in Isopropanol/Methanol (2:1) als Katalysator, Reaktionsstoppung bei einem NCO-Gehalt der Rohmischung von 43 % durch Zugabe von Dibutylphosphat und anschließende Abtrennung des nicht umgesetzten HDI durch Dünnschichtdestillation bei einer Temperatur von 130°C und einem Druck von 0,2 mbar.

| | |
|---|---|
| NCO-Gehalt: | 23,4 % |
| NCO-Funktionalität: | 3,2 |
| Monomeres HDI: | 0,2 % |
| Viskosität (23°C): | 700 mPas |

### Polyisocyanat a1 - III)

Isocyanurat- und Uretdiongruppen enthaltendes HDI-Polyisocyanat, hergestellt durch Tributylphosphin-katalysierte Oligomerisierung in Anlehnung an Beispiel 1a) der EP-A 0 377 177, mit der Änderung, dass kein 2,2,4-Trimethyl-1,3-pentandiol mitverwendet wurde. Die Reaktion wurde bei einem NCO-Gehalt der von 42 % abgebrochen und nicht umgesetztes HDI durch Dünnschichtdestillation bei einer Temperatur von 130°C und einem Druck von 0,2 mbar entfernt.

| | |
|---|---|
| NCO-Gehalt: | 22,7 % |
| NCO-Funktionalität: | 2,2 |
| Monomeres HDI: | 0,3 % |
| Viskosität (23°C): | 90 mPas |

### Polyisocyanat a2 - I)

Nach dem in EP-A 0 157 088, Beispiel 6 beschriebenen Verfahren wurden 2256 g (12 mol) 1,3-Bis(isocyanatomethyl)benzol (m-XDI) in Gegenwart von 46,5 g (0,25 mol) Pivalinsäureanhydrid und 200 g Triethylphosphat mit 18 g (1 mol) Wasser zu einem Biuretpolyisocyanat umgesetzt. Überschüssiges m-XDI wurde anschließend durch Dünnschichtdestillation bei einer Temperatur von 150°C und einem Druck von 0,1 mbar entfernt. Man erhielt ein hochviskoses schwach gelb gefärbtes Harz.

| | |
|---|---|
| NCO-Gehalt: | 21,1 % |
| NCO-Funktionalität: | 3,3 |
| Monomeres m-XDI: | 0,3 % |
| Viskosität (23°C): | 182.000 mPas |

### Polyisocyanat a2 - II)

940 g (5,0 mol) m-XDI wurden bei Raumtemperatur unter Stickstoff und Rühren mit 1,4 g (7 mmol) Tributylphosphin als Katalysator versetzt und anschließend auf 60°C erwärmt. Nach ca. einer Stunde war der NCO-Gehalt der Mischung auf 26,4 % gesunken und die Reaktion wurde durch Zugabe von 1,3 g (7 mmol) Toluolsulfonsäuremethylester und einstündiges Erhitzen auf 80°C abgebrochen. Nach Abtrennen des nicht umgesetztes überschüssigen m-XDI durch Dünnschichtdestillation bei einer Temperatur von 150°C und einem Druck von 0,1 mbar erhielt man ein Isocyanurat- und Uretdiongruppen enthaltendes Polyisocyanat in Form eines glasartigen fast farblosen Harzes.

| | |
|---|---|
| NCO-Gehalt: | 17,4 % |
| NCO-Funktionalität: | 2,4 |
| Monomeres m-XDI: | 0,2 % |

### Polyisocyanat a2 - III)

1880 g (10 mol) m-XDI wurden bei 50°C unter Stickstoff und Rühren innerhalb von 30 min mit 179 g (1,3 mol) Trimethylolpropan versetzt und anschließend auf 60°C erwärmt bis nach ca. 4 Stunden der NCO-Gehalt des **R**eaktionsgemisches auf 32,6 % gesunken war. Überschüssiges m-XDI wurde anschließend durch Dünnschichtdestillation bei einer Temperatur von 160°C und einem Druck von 0,3 mbar entfernt. **Man** erhielt ein glasartiges festes Harz mit folgenden Kenndaten:

| | |
|---|---|
| NCO-Gehalt: | 15,1 % |
| NCO-Funktionalität: | 3,2 |
| Monomeres m-XDI: | 0,3 % |

### Polyisocyanat a2 - IV)

Isocyanurat- und Iminoxadiazindiongruppen enthaltendes m-XDI-Polyisocyanat, hergestellt nach dem in Beispiel 4 der EP-A 0 962 455 beschriebenen Verfahren durch Trimeriserung von m-XDI unter Verwendung einer 50 %-igen Lösung von Tetrabutylphosphoniumhydrogendifluorid in Isopropanol/Methanol (2:1) als Katalysator und Reaktionsstoppung bei einem NCO-Gehalt der Rohmischung von 36 % durch Zugabe von Dibutylphosphat. Nach Abtrennung des nicht umgesetzten m-XDI durch Dünnschichtdestillation bei einer Temperatur von 150°C und einem Druck von 0,1 mbar erhielt man ein glasartiges festes Harz mit folgenden Kenndaten:

| | |
|---|---|
| NCO-Gehalt: | 20,4 % |
| NCO-Funktionalität: | 3,2 |
| Monomeres m-XDI: | 0,1 % |
| Viskosität (60°C): | 8.500 mPas |

### Hydroxyfunktioneller Reaktionspartner B1)

Lösemittelfreies Polyesterpolyol, hergestellt wie in WO 2010/083958 unter Ausgangsverbindungen als hydroxyfunktioneller Reaktionspartner B1) beschrieben.

| | |
|---|---|
| Viskosität (23 °C): | 19900 mPas |
| OH-Zahl: | 628 mg KOH/g |
| Säurezahl: | 2,2 mg KOH/g |
| OH-Funktionalität: | 2,6 |
| Mittleres Molekulargewicht: | 243 g/mol (aus OH-Zahl berechnet) |

### Mercaptofunktioneller Reaktionspartner B2)

| | |
|---|---|
| Pentaerythrit-tetrakis(3-mercaptopropionat) (= THIOCURE® PETMP, Fa. Bruno Bock, DE) | |
| Äquivalentgewicht: | 122,2 g/val SH |

### Beispiele 1 bis 7

Die festen bzw. hochviskosen Polyisocyanate vom Typ a2) auf Basis araliphatischer Diisocyanate wurden in einem Reaktionsgefäss bei Raumtemperatur gemeinsam mit dem niedrigviskosen HDI-Polyisocyanat vom Typ a1) unter N2-Atmosphäre vorgelegt. Zum Lösen des hochviskosen bzw. festen Harzes und Homogenisieren der Mischung wurde auf 100 - 140°C aufgeheizt und so lange gerührt bis eine nahezu klare Lösung erhalten wurde. Anschließend wurde auf 50°C abgekühlt und über einen 200 µm Filter filtriert.

Die nachfolgende Tabelle 1 zeigt Zusammensetzungen (Gew.-Teile) und Kenndaten der so hergestellten erfindungsgemäßen Polyisocyanate A1 bis A6.

**Tabelle 1**

| **Beispiel** | **1** | **2** | **3** | **4** | **5** | **6** | **7** |
|---|---|---|---|---|---|---|---|
| Polyisocyanat | A1) | A2) | A3) | A4) | A5) | A6) | A7) |
| Polyisocyanat a1 - I) | 55 | 25 | - | - | - | 70 | - |
| Polyisocyanat a1 - II) | - | - | - | - | - | - | 50 |
| Polyisocyanat a1 - III) | - | - | 10 | 25 | 10 | - | - |
| Polyisocyanat a2 - I) | 45 | 75 | 90 | - | - | - | - |
| Polyisocyanat a2 - II) | - | - | - | 75 | - | - | - |
| Polyisocyanat a2 - III) | - | - | - | - | 90 | - | - |
| Polyisocyanat a2 - IV) | - | - | - | - | - | 30 | 50 |
| NCO-Gehalt [%] | 22,1 | 21,6 | 21,3 | 18,7 | 20,6 | 20,4 | 19,4 |
| NCO-Funktionalität | 3,2 | 3,3 | 2,6 | 2,5 | 3,0 | 3,2 | 3,2 |
| Viskosität (23°) [mPas] | 13.800 | 33.800 | 90.000 | 86.000 | fest | 14.500 | 61.200 |
| Viskosität (50°) [mPas] | 1.360 | 3.600 | 3.000 | 3.700 | 6.200 | 1.400 | 3.400 |
| Brechungsindex *n_{D}²⁰* | 1,5452 | 1,5693 | 1,5849 | 1,5694 | 1,5882 | 1,5211 | 1,5349 |

### Beispiele 8 bis 15 (Herstellung von Polyurethan-Vergussmassen)

Zur Herstellung von Vergussmassen wurden erfindungsgemäße Polyisocyanatgemische A) und Polyolkomponenten B), auf 50°C vorgewärmt in den in Tabelle 2 angegebenen Kombinationen und Mengenverhältnissen (Gew.-Teile), jeweils entsprechend einem Äquivalentverhältnis von Isocyanatgruppen zu gegenüber Isocyanaten reaktiven Gruppen von 1 : 1, mit Hilfe eines Speed-Mixers DAC 150 FVZ (Firma Hauschild, DE) 1 Min bei 3500 U/Min homogenisiert und anschließend von Hand in offene, nicht beheizte Polypropylen-Formen gegossen. Nach 24 Stunden Aushärtung bei 70°C in einem Trockenschrank wurden die Prüfkörper (Durchmesser 50 mm, Höhe 5 mm) entformt.

Nach einer Nachhärtezeit von weiteren 24 Stunden bei Raumtemperatur wurden die Prüfkörper auf ihre mechanischen und optischen Eigenschaften getestet. Die Prüfergebnisse finden sich ebenfalls in Tabelle 2.

**Tabelle 2:**

| **Beispiel** | **8** | **9** | **10** | **11** | **12** | **13** | **14** | **15** |
|---|---|---|---|---|---|---|---|---|
| Polyisocyanat A1) | - | - | 60,9 | - | - | - | - | - |
| Polyisocyanat A2) | - | - | - | 61,4 | - | - | - | - |
| Polyisocyanat A3) | - | - | - | - | 61,7 | - | - | - |
| Polyisocyanat A4) | - | - | - | - | - | 64,8 | - | - |
| Polyisocyanat A5) | 69,6 | - | - | - | - | - | 62,5 | - |
| Polyisocyanat A6) | - | 69,8 | - | - | - | - | - | - |
| Polyisocyanat A7) | - | - | - | - | - | - | - | 63,5 |
| Reaktionspartner B1) | 30,4 | 30,2 | - | - | - | - | - | - |
| Reaktionspartner B2) | - | - | 39,1 | 38,6 | 38,3 | 35,2 | 37,5 | 36,5 |
| Aussehen | klar | klar | klar | klar | klar | klar | klar | klar |
| Tg[°C] | 117 | 76 | 81 | 92 | 102 | 86 | 117 | 79 |
| Shore-Härte D | 90 | 81 | 81 | 90 | 78 | 87 | 81 | 83 |
| Brechungsindex *n_{D}²⁰* | 1,5713 | 1,5328 | 1,5722 | 1,5885 | 1,5949 | 1,5887 | 1,5888 | 1,5637 |
| Abbe-Zahl | 37,3 | 43,3 | 52,0 | 51,2 | 51,9 | 51,2 | 38,1 | 40,3 |

## Patentansprüche

1. Lösemittelfreie, monomerarme Polyisocyanatgemische A) mit einem Gehalt an Isocyanatgruppen von 11 bis 23 Gew.-%, einer mittleren Isocyanat-Funktionalität von mindestens 2,3 und einem Restgehalt an monomeren Diisocyanaten von weniger als 1 Gew.-%, die zu 5 bis 95 Gew.-% aus mindestens einem Polyisocyanat a-1) auf Basis von Hexamethylendiisocyanat mit einem NCO-Gehalt von 16 bis 24 Gew.-% und zu 5 bis 95 Gew.-% aus mindestens einem Polyisocyanat a-2) auf Basis araliphatischer Diisocyanate mit einem NCO-Gehalt von 10 bis 22 Gew.-% bestehen.

2. Polyisocyanatgemische A) gemäß Anspruch 1, **dadurch gekennzeichnet, dass** es sich bei den Polyisocyanaten der Komponente a-1) um solche mit Uretdion-, Allophanat-, Isocyanurat- und/oder Iminooxadiazintrionstruktur handelt, die bei 23°C eine Viskosität von 70 bis 1.600 mPas und einen Gehalt an Isocyanatgruppen von 18 bis 24 Gew.-% aufweisen.

3. Polyisocyanatgemische A) gemäß Anspruch 1, **dadurch gekennzeichnet, dass** es sich bei den Polyisocyanaten der Komponente a-2) um solche mit Uretdion-, Allophanat-, Isocyanurat-, Iminooxadiazindion- und/oder Biuretstruktur handelt.

4. Polyisocyanatgemische A) gemäß Anspruch 3, **dadurch gekennzeichnet, dass** es sich bei den Polyisocyanaten der Komponente a-2) um solche auf Basis von m-XDI, p-XDI und/oder m-TMXDI mit einem Gehalt an Isocyanatgruppen von 11 bis 21,5 Gew.-% und einem Gehalt an monomeren Diisocyanaten von weniger als 0,8 % handelt.

5. Polyisocyanatgemische A) gemäß Anspruch 3, **dadurch gekennzeichnet, dass** es sich bei den Polyisocyanaten der Komponente a-2) um solche auf Basis von m-XDI mit einem Gehalt an Isocyanatgruppen von 15 bis 21 Gew.-% und einem Gehalt an monomerem m-XDI von weniger als 0,5 %.

6. Verfahren zur Herstellung lichtechter Polyurethanmassen durch lösemittelfreie Umsetzung der
A) monomerarmen Polyisocyanatgemische gemäß Anspruch 1 mit
B) gegenüber Isocyanatgruppen reaktiven Reaktionspartnern einer mittleren Funktionalität von 2,0 bis 6,0, gegebenenfalls unter Mitverwendung
C) weiterer Hilfs- und Zusatzmittel,
unter Einhaltung eines Äquivalentverhältnisses von Isocyanatgruppen zu gegenüber Isocyanaten reaktiven Gruppen von 0,5 : 1 bis 2,0 : 1.

7. Verfahren gemäß Anspruch 6, **dadurch gekennzeichnet, dass** als Hilfs- und Zusatzmittel Katalysatoren, UV-Stabilisatoren, Antioxidantien und/oder Formtrennmittel eingesetzt werden.

8. Verfahren gemäß Anspruch 6, **dadurch gekennzeichnet, dass** die Umsetzung der Reaktionspartner bei einer Temperatur von bis zu 180°C und einem Druck von bis zu 300 bar durchgeführt wird.

9. Verwendung der gemäß Anspruch 6 erhältlichen lichtechten Polyurethanmassen zur Herstellung transparenter kompakter oder geschäumter Formkörper.

10. Verwendung der gemäß Anspruch 6 erhältlichen transparenten lichtechten Polyurethanmassen als Glasersatz.

11. Verwendung der gemäß Anspruch 6 erhältlichen transparenten lichtechten Polyurethanmassen als optische Linsen oder Brillengläser.

## Claims

1. Solvent-free, low-monomer polyisocyanate mixtures A) having a content of isocyanate groups of from 11 to 23% by weight, an average isocyanate functionality of at least 2.3 and a residual content of monomeric diisocyanates of less than 1% by weight, which consist to an extent of from 5 to 95% by weight of at least one polyisocyanate a-1) based on hexamethylene diisocyanate and having an NCO content of from 16 to 24% by weight and to an extent of from 5 to 95% by weight of at least one polyisocyanate a-2) based on araliphatic diisocyanates and having an NCO content of from 10 to 22% by weight.

2. Polyisocyanate mixtures A) according to Claim 1, **characterized in that** the polyisocyanates of the component a-1) are polyisocyanates which have a uretdione, allophanate, isocyanurate and/or iminooxadiazinetrione structure and have a viscosity of from 70 to 1600 mPas at 23°C and a content of isocyanate groups of from 18 to 24% by weight.

3. Polyisocyanate mixtures A) according to Claim 1, **characterized in that** the polyisocyanates of the component a-2) are polyisocyanates which have a uretdione, allophanate, isocyanurate, iminooxadiazinedione and/or biuret structure.

4. Polyisocyanate mixtures A) according to Claim 3, **characterized in that** the polyisocyanates of the component a-2) are polyisocyanates which are based on m-XDI, p-XDI and/or m-TMXDI and have a content of isocyanate groups of from 11 to 21.5% by weight and a content of monomeric diisocyanates of less than 0.8%.

5. Polyisocyanate mixtures A) according to Claim 3, **characterized in that** the polyisocyanates of the component a-2) are polyisocyanates which are based on m-XDI and have a content of isocyanate groups of from 15 to 21% by weight and a content of monomeric m-XDI of less than 0.5%.

6. Process for preparing lightfast polyurethane compositions by solvent-free reaction of the
A) low-monomer polyisocyanate mixtures according to Claim 1 with
B) reactants which are reactive towards isocyanate groups and have an average functionality of from 2.0 to 6.0, optionally with concomitant use of
C) further auxiliaries and additives,
with maintenance of an equivalence ratio of isocyanate groups to groups which are reactive towards isocyanates of from 0.5:1 to 2.0:1.

7. Process according to Claim 6, **characterized in that** catalysts, UV stabilizers, antioxidants and/or mould release agents are used as auxiliaries and additives.

8. Process according to Claim 6, **characterized in that** the reaction of the reactants is carried out at a temperature of up to 180°C and a pressure of up to 300 bar.

9. Use of the lightfast polyurethane compositions obtainable according to Claim 6 for producing transparent compact or foamed mouldings.

10. Use of the transparent lightfast polyurethane compositions obtainable according to Claim 6 as glass substitute.

11. Use of the transparent lightfast polyurethane compositions obtainable according to Claim 6 as optical lenses or spectacle lenses.

## Revendications

1. Mélanges de polyisocyanates A) à faible teneur en monomères, sans solvant, ayant une teneur en groupes isocyanate de 11 à 23 % en poids, une fonctionnalité isocyanate moyenne d'au moins 2,3 et une teneur résiduelle en diisocyanates monomères de moins de 1 % en poids, qui sont constitués à raison de 5 à 95 % en poids d'au moins un polyisocyanate a-1) à base d'hexaméthylènediisocyanate ayant une teneur en NCO de 16 à 24 % en poids et à raison de 5 à 95 % en poids d'au moins un polyisocyanate a-2) à base de diisocyanates araliphatiques ayant une teneur en NCO de 10 à 22 % en poids.

2. Mélanges de polyisocyanates A) selon la revendication 1, **caractérisés en ce que** pour ce qui est des polyisocyanates du composant a-1) il s'agit de ceux à structure urétdione, allophanate, isocyanurate et/ou imino-oxadiazinetrione, qui présentent à 23 °C une viscosité de 70 à 1 600 mPa.s et une teneur en groupes isocyanate de 18 à 24 % en poids.

3. Mélanges de polyisocyanates A) selon la revendication 1, **caractérisés en ce que** pour ce qui est des polyisocyanates du composant a-2) il s'agit de ceux à structure urétdione, allophanate, isocyanurate, imino-oxadiazinetrione et/ou biuret.

4. Mélanges de polyisocyanates A) selon la revendication 3, **caractérisés en ce que** pour ce qui est des polyisocyanates du composant a-2) il s'agit de ceux à base de m-XDI, p-XDI et/ou m-TMXDI ayant une teneur en groupes isocyanate de 11 à 21,5 % en poids et une teneur en diisocyanates monomères de moins de 0,8 %.

5. Mélanges de polyisocyanates A) selon la revendication 3, **caractérisés en ce que** pour ce qui est des polyisocyanates du composant a-2) il s'agit de ceux à base de m-XDI ayant une teneur en groupes isocyanate de 15 à 21 % en poids et une teneur en m-XDI monomère de moins de 0,5 %.

6. Procédé pour la production de matières polyuréthanes résistantes à la lumière, par mise en réaction sans solvant
A) des mélanges de polyisocyanates à faible teneur en monomères selon la revendication 1 avec
B) des partenaires réactionnels réactifs vis-à-vis de groupes isocyanate, ayant une fonctionnalité moyenne de 2,0 à 6,0, éventuellement avec utilisation simultanée
C) d'autres adjuvants et additifs,
avec maintien d'un rapport d'équivalents de groupes isocyanate à groupes réactifs vis-à-vis d'isocyanates de 0,5 : 1 à 2,0 : 1.

7. Procédé selon la revendication 6, **caractérisé en ce qu'**on utilise comme adjuvants et additifs des catalyseurs, des stabilisants UV, des antioxydants et/ou des agents de démoulage.

8. Procédé selon la revendication 6, **caractérisé en ce que** la réaction des partenaires réactionnels est effectuée à une température de jusqu'à 180 °C et sous une pression de jusqu'à 300 bars.

9. Utilisation des matières polyuréthane résistantes à la lumière, pouvant être obtenues selon la revendication 6, pour la production de corps moulés transparents compacts ou expansés.

10. Utilisation des matières polyuréthane résistantes à la lumière, transparentes, pouvant être obtenues selon la revendication 6, en tant que remplacement du verre.

11. Utilisation des matières polyuréthane résistantes à la lumière, transparentes, pouvant être obtenues selon la revendication 6, en tant que lentilles optiques ou verres de lunettes.
